# EUROPÄISCHE PATENTSCHRIFT

(11) **EP 0 556 608 B1**
(45) Veröffentlichungstag und Bekanntmachung des Hinweises auf die Patenterteilung: **23.04.1997**
(21) Anmeldenummer: 93101241.3
(22) Anmeldetag: 28.01.1993
(51) Int. Cl.: C22B 7/02, C22B 4/08

(54) **Verfahren zur Beseitigung von staubförmigen Stoffen aus Verbrennungsanlagen und Anlage zur Durchführung des Verfahrens**
Process for the elimination of dusts from incinerators and installation for carrying out the process
Procédé d'élimination des poussières provenant d'incinérateurs et installation de mise en oeuvre du procédé

(30) Priorität: 18.02.1992 DE 4204769
(43) Veröffentlichungstag der Anmeldung: 25.08.1993
(73) Patentinhaber: RWE Energie Aktiengesellschaft, 45128 Essen (DE); MANNESMANN Aktiengesellschaft, 40027 Düsseldorf (DE)
(72) Erfinder: Bullmann, Guido, Dr.-Ing., W-4300 Essen (DE); Chwieralski, Josef, Dipl.-Ing., W-4030 Ratingen 8 (DE); Jeschka, Peter, Dipl.-Ing., W-4250 Bottrop (DE); Rath, Gero, Dr.-Ing., W-4330 Mülheim (DE); Stöckmann, Hartmut, Dipl.-Ing., W-4320 Hattingen (DE); Vlajcic, Todor, Dr., W-4100 Duisburg (DE)
(74) Vertreter: Honke, Manfred, Dr.-Ing.

(56) Entgegenhaltungen:
- EP-A- 0 340 644
- WO-A-91/02824
- US-A- 4 917 725
- US-A- 5 004 496
- CHEMICAL ABSTRACTS, vol. 113, 1990, Columbus, Ohio, US; abstract no. 118711n, HARP G. ET AL & COMM. EUR. COMMUNITIES, [REP] EUR 1990, EUR 12613

## Beschreibung

Die Erfindung betrifft ein Verfahren zur Beseitigung von staubförmigen Stoffen aus Verbrennungsanlagen durch Einschmelzen. Vorzugsweise betrifft die Erfindung ein Verfahren zur Beseitigung von staubförmigen Stoffen aus Müllverbrennungsanlagen. Staubförmige Stoffe bezeichnet im Rahmen der Erfindung insbesondere Flugasche aus Rauchgasreinigungsanlagen. Sie können feinteilige Koks- oder Kohleanteile mitführen. Staubförmige Stoffe meint aber auch Reaktionsprodukte einer Rauchgasbehandlung, metallreiche Stäube, Kondensate, Rostasche u. dgl. Die staubförmigen Stoffe sind mit Schadstoffen beladen und bedürfen daher der Beseitigung oder der aufwendigen Entsorgung. Die Erfindung betrifft fernerhin eine Anlage zur Durchführung eines solchen Verfahrens.

Aus der US-PS 5,004,496 ist ein Verfahren und eine Anlage zur Behandlung von Stäuben aus Abgasen von metallurgischen Prozessen, insbesondere aus der Stahlproduktion, bekannt. Eine Gemisch von Schlackebildnern, staubförmigen Stoffen und Reduktionsmittel wird von oben in einen geschlossenen Elektroniederschachtofen eingeführt. Der Elektroniederschachtofen wird mittels Elektroden in gasdichter Ausführung beheizt. Schadstoffe aus den Stäuben werden in die gebildete Schlacke eingebunden und die Schlacke mit den eingebundenen Bestandteilen von Zeit zu Zeit abgezogen. Entstehende Abgase werden aus dem bekannten Elektroniederschachtofen abgezogen. Dadurch, daß bei diesem bekannten Verfahren die staubförmigen Stoffe von oben in den Elektroniederschachtofen eingebracht und auf die Schlacke aufgestreut werden, wird mit den Abgasen bereits ein relativ großer Teil der schadstoffhaltigen Stäube wieder ausgetragen. Schon von daher können die Schadstoffe nicht vollständig und effektiv in der Schlacke eingebunden werden. Durch das Aufstreuen werden die staubförmigen Stoffe außerdem nicht ausreichend gleichmäßig in der Schlacke verteilt und somit gelingt eine Umsetzung bzw. Einbindung in der Schlacke nur unvollständig. Das führt dazu, daß schadstoffhaltige nicht verwertbare Reststoffe anfallen, die aufwendig entsorgt werden müssen. Im übrigen weisen die nach dem bekannten Verfahren aus dem Elektroniederschachtofen abgezogenen Abgase einen relativ hohen Schadstoffgehalt auf. Das macht eine umfangreiche und sehr aufwendige Abgasreinigung erforderlich.

Verfahren und Anlagen zur Beseitigung von staubförmigen Stoffen aus Rauchgasreinigungsanlagen durch Einschmelzen sind in verschiedenen Ausführungsformen bekannt. So kennt man Einschmelzöfen, die über besondere Heizstäbe beheizt sind, welche ihre Wärme ausschließlich durch Strahlung auf die Schmelze übertragen. Die Schmelze ist eine Glasschlackenschmelze. Die Schadstoffe werden mittels Förderschnecke auf die Glasschlackenschmelze aufgestreut. Es ist fernerhin bekannt, zum Einschmelzen von staubförmigen Stoffen aus Rauchgasreinigungsanlagen mit plasmabeheizten Brennern zu arbeiten, die beispielsweise in Sternschaltung angeordnet sind. In den Sternpunkt aus heißem Plasma wird der Staub eingebracht und erhitzt. Er tropft in ein darunter befindliches Glasschlackenbad. Bei dieser Verfahrensweise stört, daß ein großer Anteil der eingesetzten staubförmigen Stoffe den Schmelzofen mit dem Abgas oder Rauchgas wieder verläßt. Handelt es sich bei den staubförmigen Stoffen um Flugasche, so wird diese zu etwa 70 % im Glas eingebunden bzw. umgewandelt, während der Rest den Schmelzofen wieder verläßt. Die hohe Plasmatemperatur wird durch Strahlung und Konvektion auf die staubförmigen Stoffe übertragen, woraus hohe Verdampfungsverluste resultieren. Es ist auch bekannt, mit Glasschmelzöfen zu arbeiten, in denen eine Glasschlacke aufrechterhalten wird. Die einzuschmelzenden staubförmigen Stoffe werden auf die Glasschlacke aufgestreut und sollen durch einen Rührer gleichmäßig verteilt werden, was nur unvollständig gelingt. Die Glasschmelze und die aufsteigenden Gase erhitzen die aufschwimmende Gemengeschicht bis zum Schmelzpunkt. Dabei entstehen Probleme, die zu nichtverwertbaren Reststoffen führen.

Aus der EP-A-0 340 644 ist ein Verfahren zur Beseitigung und zum Recycling von Abfallstoffen, insbesondere von giftigen Abfallstäuben, bekannt. Dabei werden die Abfallstoffe in einen üblichen Schachtofen, wie beispielsweise einem Hochofen, der für herkömmliche Metallschmelzprozesse eingesetzt wird, eingebracht. Die mit Bindemitteln und Brennstoff angereicherten Abfallstoffe werden im Bereich der Schmelzzone des Schachtofens eingedüst. Dabei sollen die Schadstoffe in der im Ofen entstehenden Schlacke umgesetzt bzw. abgebunden werden. Die Schlacke wird von Zeit zu Zeit aus dem Ofen abgezogen. Dabei erfolgt die Abbindung der Schadstoffe jedoch nur sehr unvollständig, da die chemischen Reaktionen sehr unkontrolliert ablaufen und die chemischen Reaktionsbedingungen nicht ausreichend gezielt eingestellt werden können. Im übrigen entwickeln sich schadstoffhaltige und giftige Rauchgase, die einen aufwendigen und mehrstufigen Reinigungsprozeß erforderlich machen.

Die bekannten Maßnahmen sind einerseits verhältnismäßig aufwendig, andererseits stört die Tatsache, daß ein hoher Anteil von Reststoffen ausgetragen wird oder als nichtverwertbar verbleibt oder daß Verdampfungsverluste in Kauf genommen werden müssen. Auch ist die Verfahrensführung verbesserungsbedürftig.

Der Erfindung liegt das technische Problem zugrunde, ein besonders einfaches und dennoch funktionssicheres Verfahren zur Beseitigung von aus Verbrennungsanlagen, insbesondere Müllverbrennungsanlagen, anfallenden staubförmigen Stoffen anzugeben, bei dem störende Verdampfungsverluste oder Reststoffmengen vermieden werden und das sich insbesondere auch durch die Entwicklung schadstoffarmer Abgase auszeichnet. Der Erfindung liegt fernerhin die Aufgabe zugrunde, eine einfache und funktionssichere Anlage zur Durchführung des erfindungsgemäßen Verfahrens anzugeben, die unschwer unterschiedlichen Betriebsbedingungen angepaßt werden kann.

Zur Lösung dieses technischen Problems ist Gegenstand der Erfindung ein Verfahren zur Beseitigung von staubförmigen Stoffen aus Verbrennungsanlagen insbesondere aus Müllverbrennungsanlagen, durch Einschmelzen, wobei die Kombination der folgenden Merkmale verwirklicht ist:
a) das Einschmelzen wird in einem geschlossenen Elektroniederschachtofen mit zumindest einer Elektrode in gasdichter Ausführung durchgeführt,
b) in dem Elektroniederschachtofen wird ein Bad aus einer Schlackeschmelze erzeugt und durch die Zuführung von elektrischer Energie aufrechterhalten,
c) das Bad wird mit einer Koksschicht abgedeckt und die staubförmigen Stoffe werden mit einer Tauchlanze unter der Koksabdeckung in das Bad eingeführt,
d) in den Elektroniederschachtofen wird oberhalb der das Bad abdeckenden Koksschicht Luft und/oder Sauerstoff eingeblasen und dadurch werden im Abgas enthaltene Metalldämpfe und dergleichen in Metalloxide überführt und dadurch für eine Abscheidung im Zuge der Abgasreinigung vorbereitet,
wobei die einschmelzfähigen Bestandteile der staubförmigen Stoffe in die Schlacke eingebunden werden und die Schlacke mit den eingebundenen Bestandteilen kontinuierlich oder von Zeit zu Zeit abgezogen wird, und wobei die entstehenden Abgase einer Abgasreinigung unterworfen werden. Es versteht sich, daß bei kontinuierlichem Abzug auch eine kontinuierliche Neubildung der Schlacke durchgeführt wird, und zwar durch Einführung von Schlackebildnern. Die Schlacke kann der Verwertung zugeführt werden, weil die Schadstoffe beim Einschmelzen zerstört werden. Die Maßnahme, wonach das Bad aus der Schlackenschmelze mit einer Koksschicht abgedeckt wird und die staubförmigen Stoffe mit der Tauchlanze unter der Koksabdeckung in das Bad eingeführt werden, erlaubt es, das Einschmelzen der staubförmigen Stoffe durch Einstellung der Schlacke unter reduzierenden Bedingungen durchzuführen. Auf diese Weise läßt sich z.B. erreichen, daß in dem staubförmigen Stoff mitgeführte Schwefelverbindungen zu Calciumsulfid abgebunden werden. Ist die beschriebene Koksabdeckung verwirklicht, so können reduzierende Bedingungen durch Einstellung der Schlacke unschwer aufrechterhalten werden, beispielsweise durch Beimischung von Kohle. Im Rahmen der Erfindung kann aber auch mit nichtreduzierenden Bedingungen gearbeitet werden. Dann entstehen aus den Schwefelverbindungen der staubförmigen Stoffe Schwefeloxide, die mit dem Rauchgas abgehen und durch die Rauchgasreinigung entfernt werden können.

Die Erfindung geht von der Erkenntnis aus, daß die in der Metallurgie bewährten Elektroniederschachtöfen ohne Schwierigkeiten auch zum Einschmelzen der oben beschriebenen staubförmigen Stoffe eingesetzt werden können, wenn die Kombination der beschriebenen Merkmale verwirklicht wird. Es versteht sich, daß die Verwendung von Elektroniederschachtöfen eine verfahrenstechnische und apparative Adaptation an die erfindungsgemäßen Maßnahmen nicht ausschließt. Insoweit kann nach den herrschenden Baulehren für Elektroniederschachtöfen gearbeitet werden. Das Prinzip bleibt praktisch unverändert.

Im einzelnen bestehen im Rahmen der Erfindung mehrere Möglichkeiten der weiteren Ausbildung und Gestaltung des Verfahrens. Die Abgasreinigung erfolgt mit den üblichen Methoden, beispielsweise mit Hilfe von Zyklonen, Schlauchfiltern und ggf. nachgeschalteten Sorptionseinrichtungen. Aber auch eine nasse Abgasreinigung ist möglich.

Wird im Rahmen des erfindungsgemäßen Verfahrens chargenweise gearbeitet, so besteht die Möglichkeit, zu Beginn eines Einschmelzvorganges mit einer calciumreichen Schlacke zu arbeiten und gegen Ende des Einschmelzvorganges durch Zuführung von Sand eine Glasschlacke zu bilden. Auf diese Weise kann in der ersten Phase eine sehr intensive Schwefeleinbindung erreicht werden. Enthalten die staubförmigen Stoffe Metalle oder werden solche beigegeben, so besteht die Möglichkeit, unter dem Bad der flüssigen Schlacke ein metallisches Bad aus hauptsächlich flüssigem Eisen aufrechtzuerhalten, um die Metalle aufzunehmen. Dieses Bad wird von Zeit zu Zeit kontinuierlich abgezogen.

Die Einführung der staubförmigen Stoffe in das Bad aus der Schlackenschmelze wird durch gekühlten Tauchlanzen erfolgen.

Es besteht aber auch die Möglichkeit, mit zumindest einer hohlen Elektrode zu arbeiten und diese zugleich als Tauchlanze einzusetzen.

Arbeitet man erfindungsgemäß, so können insbesondere umweltbelastende, voluminöse staubförmige Stoffe auf elektrischem Wege eingeschmolzen werden, wobei eine unbedenklich weiterverwertbare kompakte Schlacke glasiger Konsistenz und, je nach Zusammensetzung der staubförmigen Stoffe, eine metallreiche Restphase anfällt, deren Menge klein sein sollte, die jedoch ohne weiteres an eine Metallhütte abgegeben werden kann. Die Abgase gelangen schadstoffarm in die Abgasreinigung, z. B. in eine Rauchgasreinigung der Verbrennungsanlage, die zumeist ohnehin vorhanden ist.

Gegenstand der Erfindung ist auch eine Anlage gemäß Patentanspruch 6 zur Durchführung des beschriebenen Verfahrens, die im folgenden anhand einer Zeichnung, die das Schema einer erfindungsgemäßen Anlage darstellt, erläutert wird. Dabei werden gleichzeitig auch technologische Zusammenhänge des erfindungsgemäßen Verfahrens beispielsweise vertieft.

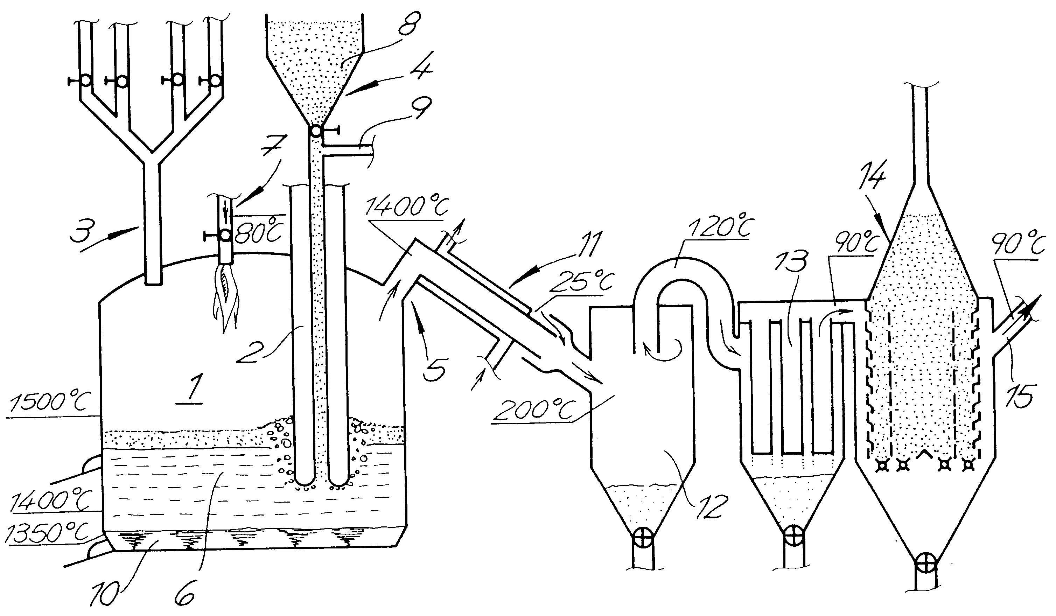

Die in der Zeichnung dargestellte Anlage dient zur Durchführung des beschriebenen Verfahrens. Zum grunsätzlichen Aufbau gehören ein Elektroniederschachtofen 1 mit zumindest einer Elektrode 2 in gasdichter Ausführung als Schmelzofen für die staubförmigen Stoffe, eine Einrichtung 3 zur dosierten Zuführung von Schlackebildnern in der Decke des Elektroniederschachtofens 1, eine Einrichtung 4 zur Einführung der staubförmigen Stoffe in den Elektroniederschachtofen 1 und eine Einrichtung 5 zur Abführung der entstehenden Abgase.

Die Anordnung ist so getroffen, daß die staubförmigen Stoffe in ein im Elektroniederschachtofen 1 gebildetes Bad 6 aus einer Schlackenschmelze einführbar sind. In den Elektroniederschachtofen 1 ist oberhalb des Bades 6 aus der Schlackenschmelze eine Einrichtung 7 für die Zuführung von Luft und/oder Sauerstoff vorgesehen. Die Einrichtung 3 für die Zuführung der Schlackenbildner hat verschiedene · Zuführungsleitungen, beispielsweise eine für Eisenerz, eine für Calciumoxid, eine für Sand und eine für Koks. Die staubförmigen Stoffe werden bei der dargestellten Anlage aus einem Staubbunker 8 oder Staubkessel durch eine hohle Elektrode 2 des Elektroniederschachtofens zugeführt. Dabei wird regelmäßig mit einem Förderfluid gearbeitet, welches über die Leitung 9 eingeblasen wird. Enthalten die staubförmigen Stoffe Metalle, so befindet sich unter dem Bad 6 aus der Schlackenschmelze zweckmäßigerweise ein Bad 10, welches hauptsächlich aus einer Eisenschmelze besteht. Das Abgas gelangt im Ausführungsbeispiel über einen Wärmetauscher 11 in einen Zyklon 12 und aus dem Zyklon 12 in ein Schlauchfilter 13. Nachgeschaltet ist ein Sorptionsfilter 14 mit Aktivkohle. Das Abgas geht über die Leitung 15 zur Abgasreinigung. In das Schema wurden Richtwerte für die Temperaturen eingetragen.

## Patentansprüche

1. Verfahren zur Beseitigung von staubförmigen Stoffen aus Verbrennungsanlagen, insbesondere aus Müllverbrennungsanlagen, durch Einschmelzen, wobei die Kombination der folgenden Merkmale verwirklicht ist:
a) das Einschmelzen wird in einem geschlossenen Elektroniederschachtofen mit zumindest einer Elektrode in gasdichter Ausführung durchgeführt,
b) in dem Elektroniederschachtofen wird ein Bad aus einer Schlackeschmelze erzeugt und durch die Zuführung von elektrischer Energie aufrechterhalten,
c) das Bad wird mit einer Koksschicht abgedeckt und die staubförmigen Stoffe werden mit einer Tauchlanze unter der Koksabdeckung in das Bad eingeführt,
d) in den Elektroniederschachtofen wird oberhalb der das Bad abdeckenden Koksschicht Luft und/oder Sauerstoff eingeblasen und dadurch werden im Abgas enthaltene Metalldämpfe und dergleichen in Metalloxide überführt und dadurch für eine Abscheidung im Zuge der Abgasreinigung vorbereitet,
wobei die einschmelzfähigen Bestandteile der staubförmigen Stoffe in die Schlacke eingebunden werden und die Schlacke mit den eingebundenen Bestandteilen kontinuierlich oder von Zeit zu Zeit abgezogen wird und wobei die entstehenden Abgase einer Abgasreinigung unterworfen werden.

2. Verfahren nach Anspruch 1, wobei das Einschmelzen der Stoffe durch Einstellung der Schlacke unter reduzierenden Bedingungen durchgeführt wird.

3. Verfahren nach einem der Ansprüche 1 oder 2, wobei zu Beginn eines Einschmelzvorganges mit einer calciumreichen Schlacke gearbeitet und gegen Ende eines Einschmelzvorganges durch Zuführung von Sand eine Glasschlacke gebildet wird.

4. Verfahren nach einem der Ansprüche 1 bis 3, wobei unter dem Bad der flüssigen Schlacke ein metallisches Bad aus hauptsächlich flüssigem Eisen aufrechterhalten wird.

5. Verfahren nach einem der Ansprüche 1 bis 4, wobei mit zumindest einer hohlen Elektrode gearbeitet und diese zugleich als Tauchlanze eingesetzt wird.

6. Anlage für die Durchführung des Verfahrens nach einem der Ansprüche 1 bis 5, gekennzeichnet durch
einen Elektroniederschachtofen (1) mit zumindest einer Elektrode (2) in gasdichter Ausführung als Schmelzofen für die staubförmigen Stoffe,
eine Einrichtung (3) zur dosierten Zuführung von Schlackbildnern und Koks in der Decke des Elektroniederschachtofens (1),
eine Tauchlanze zur Einführung der staubförmigen Stoffe in ein im Elektroniederschachtofen (1) gebildetes Bad (6) aus einer Schlackenschmelze,
eine Einrichtung (7) zur Einführung von Luft und/oder Sauerstoff oberhalb des Bades (6) in den Elektroniederschachtofen (1),
und eine Einrichtung (5) zur Abführung der entstehenden Abgase.

7. Anlage nach Anspruch 6, gekennzeichnet durch eine Einrichtung zur Abführung der entstehenden Abgase, die mit einem Wärmetauscher (11) ausgerüstet ist.

## Claims

1. A process for eliminating dustlike substances from combustion installations, particularly from refuse incineration installations, by melting-down, wherein the combination of the following features is put into effect:
a) melting-down is effected in a closed electric low shaft furnace which has at least one electrode and is of gas-tight design,
b) a bath comprising a molten slag is produced in the electric low shaft furnace and is maintained by supplying electrical energy,
c) the bath is covered with a coke layer and the dustlike substances are introduced into the bath, under the coke cover, with an immersion lance,
d) air and/or oxygen are blown into the electric low shaft furnace above the coke layer covering the bath and metal vapours and the like which are contained in the waste-gas are thereby converted into metal oxides and are thereby prepared for a separation operation in the course of the waste-gas purification,
wherein the constituents of the dustlike substances which are capable of being melted down are incorporated in the slag and the slag with the incorporated constituents is drawn off continuously or from time to time and wherein the resulting waste-gases are subjected to a waste-gas purification operation.

2. A process according to claim 1, wherein melting-down of the substances is effected by adjusting the slag under reducing conditions.

3. A process according to either one of claims 1 or 2, wherein a calcium-rich slag is employed at the start of a melting-down operation and a glassy slag is formed towards the end of a melting-down operation by feeding in sand.

4. A process according to any one of claims 1 to 3, wherein a metal bath which mainly comprises liquid iron is maintained under the bath of liquid slag.

5. A process according to any one of claims 1 to 4, wherein at least one hollow electrode is employed and this is used at the same time as an immersion lance.

6. An installation for carrying out the process according to any one of claims 1 to 5, characterised by
an electric low shaft furnace (1), which has at least one electrode (2) and is of gas-tight design, as a melting furnace for the dustlike substances,
a device (3) in the roof of the electric low shaft furnace (1) for the metered supply of slag formers and coke,
an immersion lance for introducing the dustlike substances into a bath (6) formed in the electric low shaft furnace (1) and comprising a molten slag,
a device (7) for introducing air and/or oxygen into the electric low shaft furnace (1) above the bath (6),
and a device (5) for conveying away the resulting waste-gases.

7. An installation according to claim 6, characterised by a device for conveying away the resulting waste-gases which is equipped with a heat exchanger (11).

## Revendications

1. Procédé pour l'élimination de poussières provenant d'installations d'incinération, en particulier d'installations d'incinération d'ordures ménagères, par fusion, la combinaison des caractéristiques suivantes étant réalisée :
a) la fusion est exécutée dans un bas fourneau électrique fermé avec au moins une électrode d'une manière étanche aux gaz,
b) dans le bas fourneau électrique, un bain est produit à partir d'une coulée de laitier et est maintenu par apport d'énergie électrique,
c) le bain est recouvert d'une couche de coke et les poussières sont introduites dans le bain au moyen d'une lance d'immersion en dessous du revêtement de coke,
d) de l'air et/ou de l'oxygène sont insufflés dans le bas fourneau électrique, au-dessus de la couche de coke, recouvrant le bain, et de ce fait, les vapeurs de métal et similaires, contenues dans les gaz d'échappement, sont transformées en oxyde de métal et sont ainsi préparées pour une séparation dans le cadre de la purification des gaz d'échappement,
les composants, aptes à être fondus, des poussières sont liés dans le laitier et le laitier est extrait en continu ou de temps en temps avec les composants liés et les gaz d'échappement produits sont soumis à une purification des gaz d'échappement.

2. Procédé selon la revendication 1, dans lequel la fusion des poussières est effectuée en ajustant du laitier à des conditions réductrices.

3. Procédé selon l'une des revendications 1 ou 2, dans lequel au début d'une opération de fusion, on travaille avec un laitier riche en calcium et à la fin d'une opération de fusion, un laitier vitreux est formé par apport de sable.

4. Procédé selon l'une des revendications 1 à 3, dans lequel un bain métallique, se composant essentiellement de fer liquide, est maintenu sous le bain de laitier liquide.

5. Procédé selon l'une des revendications 1 à 4, dans lequel on travaille avec au moins une électrode creuse qui sert en même temps de lance d'immersion.

6. Installation pour la mise en oeuvre du procédé selon l'une des revendications 1 à 5, caractérisée par
un bas fourneau électrique (1) présentant au moins une électrode (2), d'une réalisation étanche aux gaz, servant de four de fusion pour les poussières,
un dispositif (3) pour le dosage de l'apport de fondants de scorification et de coke dans le plafond du bas fourneau électrique (1),
une lance d'immersion pour l'introduction des poussières dans un bain (6), formé dans le bas fourneau électrique (1), et se composant d'une coulée de laitier,
un dispositif (7) pour l'introduction d'air et/ou d'oxygène au-dessus du bain (6) dans le bas fourneau électrique (1),
et un dispositif (5) pour l'évacuation des gaz d'échappement générés.

7. Installation selon la revendication 6, caractérisé par un dispositif pour l'évacuation des gaz d'échappement générés, qui est équipé d'un échangeur thermique (11).
